# EUROPEAN PATENT APPLICATION

(11) **EP 3 739 836 A1**
(43) Date of publication of application: **18.11.2020**
(21) Application number: 19177789.5
(22) Date of filing: 31.05.2019
(51) Int. Cl.: H04L 29/06, H04W 12/02, G06F 21/36, G06F 21/62

(54) **SECURE TRANSMISSION OF DATA TO SYSTEMS USING SCANNABLE CODES**

(30) Priority: 13.05.2019 US 201916410552
(71) Applicant: CyberArk Software Ltd., 4951040 Petach-Tikva (IL)
(72) Inventor: Aizikovich, Evgeni, 4951040 Petach-Tikva (IL); Spivak, Boris, 4951040 Petach-Tikva (IL); Yavnilovich, Michael, 4951040 Petach-Tikva (IL)
(74) Representative: Finnegan Europe LLP

(57) **Abstract**

Disclosed embodiments relate to systems and methods for securely obtaining data in cooperation with an auxiliary scanning device. Techniques include accessing one or more cryptographic keys, obtaining a unique special-purpose network location, and generating a scannable code comprising encoded versions of a first cryptographic key from the one or more cryptographic keys, and the unique special-purpose network location. Further techniques include making available, to the auxiliary scanning device, the scannable code, accessing data that has been uploaded to the unique special-purpose network location in a form encrypted by the first cryptographic key, decrypting the accessed encrypted data using a second cryptographic key from the one or more cryptographic keys, and obtaining, based on at least the decrypting, the data.

## Description

### BACKGROUND

Given the increasing reliance on both computer-based infrastructures and mobile devices, a computing device, such as a server or computer terminal, may require access to certain data or files from a mobile device. A computing device, for example, may need to obtain certain data or files stored on a mobile device, or otherwise associated with a user of the device. Certain insecure and inefficient methods have been attempted for the computing system to obtain such data. For example, the data may be transferred between the two devices via a wired connection (e.g., using USB) or wirelessly (e.g., using WiFi, Bluetooth®, NFC, etc.). Other methods may be attempted for requesting access to the data or files, for example by sending an email to the user or requesting the data to be transferred manually by the user.

These methods are not suitable and secure for all types of computing devices. For example, terminal-based computers, such as those operating in a Linux or other Unix-based environment, may have limited ability to interact with a user of the computing device. Receiving a file using USB, Bluetooth, or various other methods may not be feasible based on the hardware or capabilities of the device. Further, requesting the file from the user may present difficulties as only a text-based interface may be provided. Even in machines running Windows® or other graphical operating systems, existing methods may not provide a secure and convenient means for the users to transfer data from a mobile device. For example, sending a link or other form of request for data may present security risks and may require additional steps by the user.

Accordingly, in view of these and other deficiencies in existing techniques, technological solutions are needed for obtaining data in a secure and convenient manner. Solutions should advantageously allow for a user to provide data to a computing device from a mobile device quickly and efficiently. The mobile device should be able to interact directly with the computing device, for example with a display of the computing device, to receive instructions for transferring the data, including which data or file to upload, where to upload it, and any encryption information required. Further, the ideal solution should allow the same process to be conducted by a terminal-based computing device, where techniques of interacting with the user may be limited to a text-based display.

### SUMMARY

The disclosed embodiments describe non-transitory computer readable media, systems, and methods for securely obtaining data in cooperation with an auxiliary scanning device. For example, in an exemplary embodiment, there may be a non-transitory computer readable medium including instructions that, when executed by at least one processor, cause the at least one processor to perform operations for securely obtaining data in cooperation with an auxiliary scanning device. The operations may comprise accessing one or more cryptographic keys; obtaining a unique special-purpose network location; generating a scannable code comprising encoded versions of: a first cryptographic key from the one or more cryptographic keys, and the unique special-purpose network location; making available, to the auxiliary scanning device, the scannable code; accessing data that has been uploaded to the unique special-purpose network location in a form encrypted by the first cryptographic key; decrypting the accessed encrypted data using a second cryptographic key from the one or more cryptographic keys; and obtaining, based on at least the decrypting, the data.

According to a disclosed embodiment, the operations may further comprise determining, before the accessing, that the data should be obtained.

According to a disclosed embodiment, accessing the one or more cryptographic keys may include generating the one or more cryptographic keys based on the determining.

According to a disclosed embodiment, obtaining the unique special-purpose network location may include generating a unique special-purpose network address based on the determining.

According to a disclosed embodiment, the one or more cryptographic keys may comprise a public-private key pair; the first cryptographic key may be a public key; and the second cryptographic key may be a private key.

According to a disclosed embodiment, the first cryptographic key and the second cryptographic key may each be the same symmetric key.

According to a disclosed embodiment, the unique special-purpose network location may be based on a universally unique identifier.

According to a disclosed embodiment, the unique special-purpose network location may have a limited period of validity.

According to a disclosed embodiment, the operations may further comprise receiving a notification that the data is available from the unique special-purpose network location.

According to a disclosed embodiment, the operations may further comprise querying whether the data is available from the unique special-purpose network location.

According to another disclosed embodiment, there may be an auxiliary scanning device comprising a scanning interface; a memory storing software instructions for securely providing data to a system; and a hardware-based processor configured to execute the software instructions to perform operations for securely providing data. The operations may comprise scanning the scannable code using the scanning interface; decoding the scannable code to yield the first cryptographic key and the unique special-purpose network location; encrypting data using the first cryptographic key; and transmitting to the unique special-purpose network location the encrypted data, to enable the system to obtain the encrypted data from the unique special-purpose network location and decrypt the encrypted data using a second cryptographic key maintained by the system.

According to a disclosed embodiment, the unique special-purpose network location may be a URL that includes a universally unique identifier.

According to a disclosed embodiment, the unique special-purpose network location may have a limited period of validity.

According to a disclosed embodiment, the operations may further comprise sending a report indicating that the encrypted data has been transmitted to the unique special-purpose network location.

According to another disclosed embodiment, a method may be implemented for securely obtaining data at a system in cooperation with an auxiliary scanning device. The method may comprise accessing one or more cryptographic keys; obtaining a unique special-purpose network location; generating a scannable code comprising encoded versions of: a first cryptographic key from the one or more cryptographic keys, and the unique special-purpose network location; making available, to the auxiliary scanning device, the scannable code; accessing data that has been uploaded to the unique special-purpose network location in a form encrypted by the first cryptographic key; decrypting the accessed encrypted data using a second cryptographic key from the one or more cryptographic keys; and obtaining, based on at least the decrypting, the data.

According to a disclosed embodiment, the method may further comprise querying whether the data is available from the unique special-purpose network location.

According to a disclosed embodiment, the querying may be performed periodically.

According to a disclosed embodiment, the querying may be performed anonymously by not providing an identifier of the system as part of the querying.

According to a disclosed embodiment, the querying may be performed using a long polling technique.

According to a disclosed embodiment, the querying is performed in response to receiving a notification that the data has been uploaded to the unique special-purpose network location.

Aspects of the disclosed embodiments may include tangible computer-readable media that store software instructions that, when executed by one or more processors, are configured for and capable of performing and executing one or more of the methods, operations, and the like consistent with the disclosed embodiments. Also, aspects of the disclosed embodiments may be performed by one or more processors that are configured as special-purpose processor(s) based on software instructions that are programmed with logic and instructions that perform, when executed, one or more operations consistent with the disclosed embodiments.

It is to be understood that both the foregoing general description and the following detailed description are exemplary and explanatory only, and are not restrictive of the disclosed embodiments, as claimed.

### BRIEF DESCRIPTION OF THE DRAWINGS

The accompanying drawings, which are incorporated in and constitute a part of this specification, illustrate disclosed embodiments and, together with the description, serve to explain the disclosed embodiments. In the drawings:
Figure 1 is a block diagram of an exemplary system for securely obtaining data at a system in cooperation with an auxiliary scanning device in accordance with disclosed embodiments.
Figure 2A is a block diagram showing an exemplary computing device in accordance with disclosed embodiments.
Figure 2B is a block diagram showing an exemplary scanning device in accordance with disclosed embodiments.
Figure 3 is a block diagram depicting an exemplary process for securely obtaining data in cooperation with an auxiliary scanning device in accordance with disclosed embodiments.
Figure 4 is an exemplary illustration depicting a scanning device capable of scanning a scannable code in accordance with disclosed embodiments.
Figure 5 is an illustration depicting exemplary scannable codes in accordance with disclosed embodiments.
Figure 6 is a flowchart depicting an exemplary process for a system to securely obtain data in cooperation with an auxiliary scanning device in accordance with disclosed embodiments.
Figure 7 is a flowchart depicting an exemplary process for a scanning device to securely provide data to a system in accordance with disclosed embodiments.

### DETAILED DESCRIPTION

In the following detailed description, numerous specific details are set forth in order to provide a thorough understanding of the disclosed example embodiments. However, it will be understood by those skilled in the art that the principles of the example embodiments may be practiced without every specific detail. Well-known methods, procedures, and components have not been described in detail so as not to obscure the principles of the example embodiments. Unless explicitly stated, the example methods and processes described herein are not constrained to a particular order or sequence, or constrained to a particular system configuration. Additionally, some of the described embodiments or elements thereof can occur or be performed simultaneously, at the same point in time, or concurrently.

The techniques of securely obtaining data described herein overcome several technological problems relating to security, usability, and efficiency of data communications and associated devices. As discussed below, the disclosed embodiments provide techniques for a computing device to obtain data through the use of an auxiliary scanning device. The computing device may generate or identify a set of encryption keys and generate or identify a secure upload location for the data. This network location and an encryption key may be provided to, or otherwise made available to, a scanning device in the form of a scannable code, which the scanning device may use to encrypt and upload the data to the network location. Using a second encryption key, the computing device may then decrypt the data upon receiving it from the network location. Thus, the computing device may access the data in a secure and convenient manner by providing a Quick Response (QR) bar code, another type of bar code, an encoded image, or other scannable code.

This may be especially helpful in applications where the computing device has a limited interface to interact with users, for example, in a terminal-based system. Such terminal-based systems may include computers with Linux or Unix-like operating systems, mainframe computers, microcomputers, embedded systems, and the like. For these systems, the terminal-based interface may introduce additional complexity for transferring data to or from other devices, such as a mobile device. Using the disclosed systems and methods, the computing device may generate a scannable code and display the code (e.g., using ASCII encoding). Therefore, a secure and convenient method is provided to obtain data by the computing device. Further, even in non-Unix operation system environments, the techniques described herein may be used to more securely, flexibly, and efficiently provide data transfer between mobile computing devices and endpoint resources.

Reference will now be made in detail to the disclosed embodiments, examples of which are illustrated in the accompanying drawings.

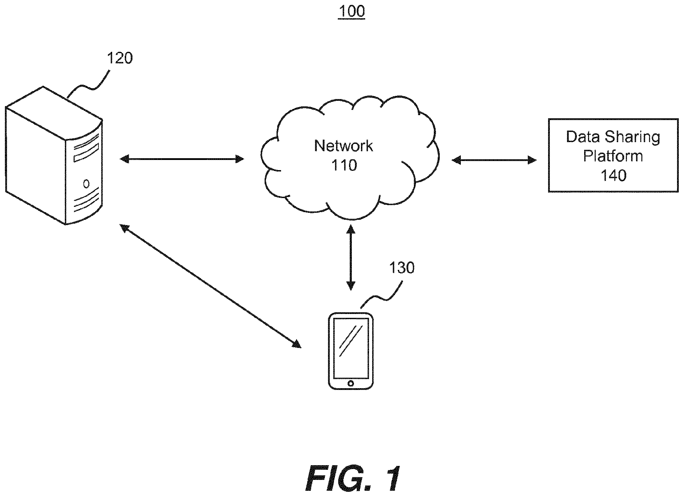

Figure 1 illustrates an exemplary system 100 for securely obtaining data at a computing device in cooperation with an auxiliary scanning device. System 100 may include one or more computing device 120, one or more scanning device 130, and one or more data sharing platform 140, as shown in Fig. 1. Computing device 120 may include a variety of different computing devices capable of communicating over a network. For example, computing device 120 may be a personal computer (e.g, a desktop or laptop), an loT device (e.g., sensor, smart home appliance, connected vehicle, etc.), a server, a mainframe, a vehicle-based or aircraft-based computer, a virtual machine (e.g., virtualized computer, container instance, etc.), or the like. Computing device 120 may be a handheld device (e.g., a mobile phone, a tablet, or a notebook), a wearable device (e.g., a smart watch, smart jewelry, an implantable device, a fitness tracker, smart clothing, a head-mounted display, etc.), an loT device (e.g., smart home devices, industrial devices, etc.), or various other devices capable of processing and/or receiving data.

In certain embodiments, computing device 120 may be a terminal-based (e.g., Unix or Linux) computing device. For example, the computing device 120 may provide only a terminal interface for interacting with the system. In such instances, computing device 120 may operate in a Linux or other terminal-based operating system environment. Thus, interacting with other devices, such as mobile devices, to securely transfer data may present difficulties for users of the system. While a terminal-based system is referred to throughout the present disclosure, it is understood that the methods and systems in the disclosed embodiments may apply to various other computer devices and systems. For example, computing device 120 may operate using a Windows™ operating system, a cloud-based operating system (e.g., through AWS™, Azure™, IBM Cloud™, etc.), or other types of non-terminal operating systems.

Computing device 120 may be in communication with scanning device 130 (e.g., mobile computing device), as shown in Fig. 1. Computing device 120 may communicate with scanning device 130 directly, for example, by displaying or otherwise presenting a scannable code for the scanning device to scan. Alternatively, or in addition, computing device 120 may communicate with scanning device 130 over a network 110. Such communications may take place across various types of networks, such as the Internet, a wired Wide Area Network (WAN), a wired Local Area Network (LAN), a wireless WAN (e.g., WiMAX), a wireless LAN (e.g., IEEE 802.11, etc.), a mesh network, a mobile/cellular network, an enterprise or private data network, a storage area network, a virtual private network using a public network, a nearfield communications technique (e.g., Bluetooth, infrared, etc.), or various other types of network communications. In some embodiments, the communications may take place across two or more of these forms of networks and protocols.

Scanning device 130 may be any device capable of scanning some form of scannable code or image. Scanning device 130, for example, may be a mobile device, such as a mobile phone, a tablet, a laptop, an e-reading device, a handheld gaming device, a digital camera, a mobile PC, a digital calculator, or the like. Scanning device may also be a wearable device, such as a smart watch, a fitness tracker, smart jewelry or various other wearable devices. In some embodiments, scanning device 130 may be a device with a dedicated scanning functionality, such as a handheld image or document scanner. Scanning device 130 may also be a stationary device, such as a desktop or laptop computer with an auxiliary scanning component in communication with the device.

Computing device 130 and scanning device 120 may be configured to communicate over network 120 with a data sharing platform 140. For example, in response to a request for data from computing device 120, scanning device 130 may be configured to upload data to data sharing platform 140. Computing device 120 may be configured to communicate with data sharing platform 140 to receive the uploaded data. Data sharing platform 140 may include any data storage location accessible by both scanning device 130 and computing device 120. For example, data sharing platform 140 may be a cloud computing service, such as a Software as a Service (SaaS) system, a Platform as a Service (PaaS), or Infrastructure as a Service (laaS) system. In such embodiments, data sharing platform 140 may be based on infrastructure of services of Amazon Web Services™ (AWS), Microsoft Azure™, Google Cloud Platform™, Cisco Metapod™, Joyent™, vmWare™, or other cloud computing providers. Data sharing platform 140 may include other commercial file sharing services, such as Dropbox™, Google Docs™, or iCloud™. In other embodiments, data sharing platform 140 may be a remote storage location, such as a network drive or server in communication with network 110.

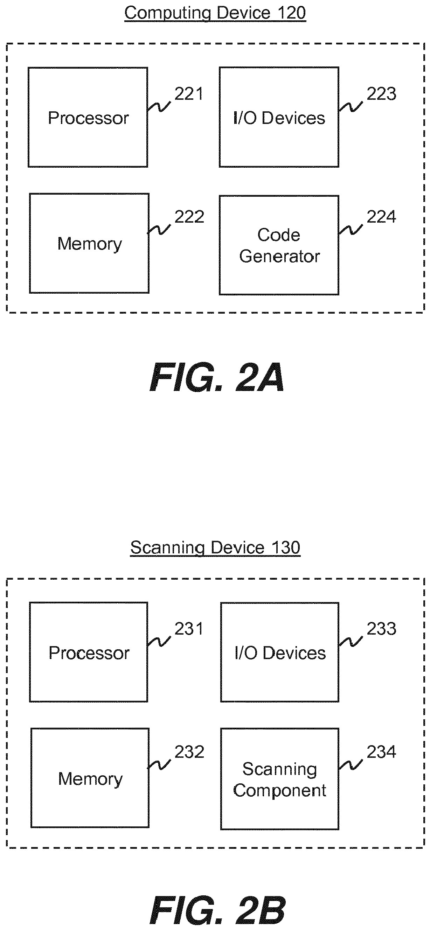

Figure 2A is a block diagram showing an exemplary computing device 120 in accordance with disclosed embodiments. Computing device 120 may include one or more processors 221, one or more memories 222, one or more input/output (I/0) devices 223, and one or more code generator components 224. Processor (or processors) 221 may include one or more data or software processing devices. For example, the processor 221 may take the form of, but is not limited to, a microprocessor, embedded processor, or the like, or may be integrated in a system on a chip (SoC). Furthermore, according to some embodiments, the processor 221 may be from the family of processors manufactured by Intel®, AMO®, Qualcomm®, Apple®, NVIDIA®, or the like. The processor 221 may also be based on the ARM architecture, a mobile processor, or a graphics processing unit, etc. The disclosed embodiments are not limited to any type of processor configured in the computing device 120.

Memory (or memories) 222 may include one or more storage devices configured to store instructions used by the processor 221 to perform functions related to the disclosed embodiments. Memory 222 may be configured to store software instructions, such as programs, that perform one or more operations when executed by the processor 221 to securely obtain data from scanning device 130, for example, using methods 600 and 700, described in detail below. The disclosed embodiments are not limited to particular software programs or devices configured to perform dedicated tasks. For example, the memory 222 may store a single program, such as a user-level application, that performs the functions of the disclosed embodiments, or may comprise multiple software programs. Additionally, the processor 221 may in some embodiments execute one or more programs (or portions thereof) remotely located from the computing device 120. Furthermore, the memory 222 may include one or more storage devices configured to store data for use by the programs.

Input/output devices 223 may include one or more integrated ports or stand-alone devices configured to allow data to be received and/or transferred by the computing device 120. The I/0 devices 223 may include one or more network adaptors or communication devices and/or interfaces (e.g., WiFi, Bluetooth®, RFID, NFC, RF, infrared, etc.) to communicate with other machines and devices, such as with other components of system 100 through network 110. In some embodiments, the I/0 devices 223 may comprise a touchscreen configured to allow a user to interact with the computing device 201, and in some embodiments, the I/0 devices 223 may comprise a keyboard, mouse, trackball, touch pad, stylus, and the like. In embodiments where computing device 120 is a terminal-based computer system, the I/O devices 223 for interacting with the device may be limited, for example to a display, a keyboard and/or a printer.

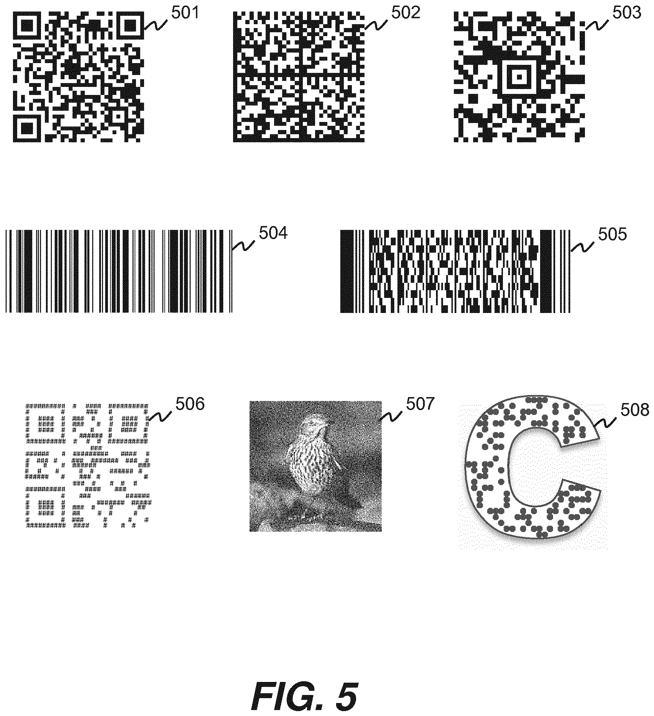

Code generator(s) 224 may allow computing device 120 to generate a scannable code, such as a QR code, a barcode, an encoded image, or another scannable code. Examples of such code formats are discussed further in connection with Figure 5. Code generator 224 may be a separate component of computing device 120, for example, with dedicated processors and/or memories. In other embodiments, though shown separately in Fig. 2A, code generator 224 may be integrated into memory 222 and/or processor 221. For example, code generator 224 may be a software code, a script, or application stored on memory 222 and/or executed by processor 221.

Figure 2B is a block diagram showing an exemplary scanning device 130 in accordance with disclosed embodiments. Scanning device 130 may include one or more processors 231, one or more memories 232, one or more input/output (I/O) devices 233, and one or more scanning components 234. As described above, scanning device 130 may be a mobile device or various other devices capable of scanning an image. Similar to processor 221, as described above, processor 231 may include one or more data or software processing devices. For example, the processor 221 may include, but is not limited to, a microprocessor, embedded processor, or a processor integrated in an SoC.

Memory (or memories) 232 may include one or more storage devices configured to store instructions used by the processor 231 to perform functions related to the disclosed embodiments. The memory 232 may be configured to store software instructions, such as programs, that perform one or more operations when executed by the processor 231 to securely provide data to computing device 120, for example using methods 600 or 700, described below. Memory 232 may be similar to memory 222 described above. For example, memory 232 may include a single program, such as a user-level application, that performs the functions of the disclosed embodiments, or may comprise multiple software programs.

I/O devices 233 may also be similar to the devices described above for computing device 120. For example, I/O devices 233 may include one or more network adaptors or communication devices and/or interfaces (e.g., WiFi, Bluetooth®, RFID, NFC, RF, infrared, etc.) to communicate with other machines and devices, a touchscreen configured to allow a user to interact with the scanning device, a display, a keyboard/keypad, a mouse, a trackball, a touch pad, a stylus, sensors (e.g., gyroscopes, accelerometers, thermometers, cameras, scanners, etc.), and the like.

Scanning component 234 may be configured to capture an image, such as scanning a 2D scannable code. Scanning component 234 may be a hardware component, such as a barcode scanning component, a camera, a document scanner or the like. In some embodiments, scanning component 234 may be an auxiliary component that communicates with scanning device 130 via Bluetooth®, WiFi, USB, etc. Scanning component 234 may have a dedicated processor and/or memory for capturing, storing and processing the scanned image. In some embodiments, scanning component 234 may describe a software component, such as a code, a script, an application or other form of software, which may be stored on memory 232 and/or executed by processor 231. In such embodiments, scanning component 234 may utilize a camera or scanner included in I/O devices 233 to scan the scannable code.

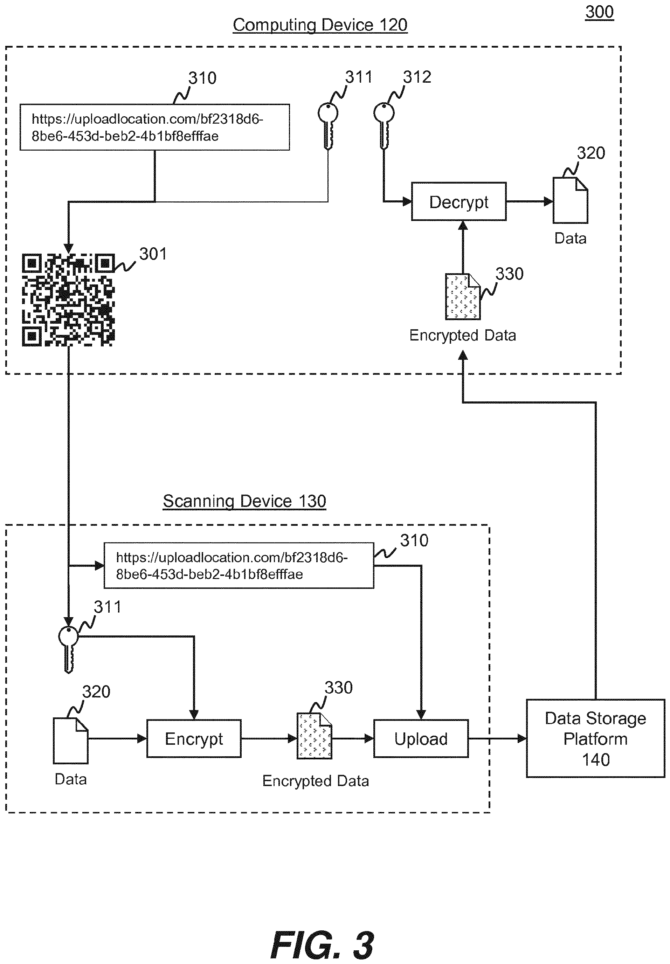

Figure 3 is a block diagram depicting an exemplary process 300 for securely obtaining data in cooperation with a scanning device in accordance with disclosed embodiments. Process 300 may be triggered in response to a need for computing device 120 to access or receive data 320 from scanning device 130 or from an identity associated with scanning device 130 (e.g., a user of the device, an account associated with the device, an application running on the device, a credential of the user, etc.). For example, a user of computing device 120 may request data from the scanning device 130, or alternatively, a user of scanning device 130 may request to provide data to computing device 120. Various other scenarios may trigger a need for computing device 120 to obtain data 320 from the scanning device 130, including those described below in relation to methods 600 and 700.

Computing device 120 may access one or more cryptographic keys 311 and 312, as shown in Fig. 3. In some embodiments, computing device 120 may generate the cryptographic keys 311 and 312, for example, based on the need to access data 320. Accordingly, in order to generate cryptographic keys 311 and 312, computing device 120 may store, or have access to, encryption algorithms such as Data Encryption Standard (DES), Triple DES (TDES), Advanced Encryption Standard (AES), CAST-128, Twofish, Serpent or various others. In other embodiments, computing device 120 may access preexisting cryptographic keys. For example, keys 311 and 312 may be stored locally on computing device 120 such as in a local memory or database. Cryptographic keys 311 and 312 may also be stored in a location accessible through network 110, for example on a remote server, in a cloud storage location, on one of the components of system 100, or various other locations. In some embodiments, cryptographic keys 311 and 312 may be generated by other means, such as by a third party or another identity in network 110, based on the need for computing device 120 to access data 320.

Cryptographic keys 311 and 312 may correspond to various encryption methods or techniques. In some embodiments, keys 311 and 312 may be an asymmetric pair, for example, with cryptographic key 311 being a public key and cryptographic key 312 being a private key. In such cases, public key 311 may be transmitted to scanning device 130 and private key 312 may be used to decrypt data encrypted using public key 311. Alternatively, keys 311 and 312 may be used to sign and to verify a digital signature associated with the data. In other embodiments, keys 311 and 312 may be symmetric keys, such that key 311 is the same as key 312. Cryptographic keys 311 and 312 may be static (e.g., for long-term use) or may be ephemeral (e.g., used for a single session or use).

Computing device 120 may also identify a unique special-purpose network location 310 for storage of data 320. The unique special-purpose network location may include any storage location that is uniquely and specifically designated for storing and accessing data 320. In some embodiments, network location 310 may be associated with data storage platform 140. For example, network location 310 may be a particular folder, path, drive, or other location within data storage platform 140 that is accessible by both computing device 120 and scanning device 130. In some embodiments, network location 310 may be a network address (e.g., IP address or URL), as shown in Fig. 3. Consistent with the disclosed embodiments, network location 310 may be generated by computing device 120 based on the need to access data 320. For example, network location 310 may be a unique network address created for the purpose of obtaining data 320. The network address 310 may include a unique ID that may be difficult to guess or predict. For example, if the network address is *https:*//*uploadlocation.com*/*bf2318d6-8be6-453d-beb2-4b1bf8efffae* as shown in Fig. 3, the string "bf2318d6-8be6-453d-beb2-4b1bf8efffae" (or a subset of the string) may be a unique identifier of the location. Network location 310 may also utilize or include other difficult to guess identifiers, such as a universally unique identifier (UUID) or randomly generated data string, to generate the network location 310. In some embodiments, the network location 310 may be temporary and may only be valid for a limited period of time (e.g., for a day, an hour, a minute, etc.).

Computing device 120 may generate a scannable code 301 to provide to scanning device 130. Scannable code 301 may be, for example, a QR code, barcode, encoded image, or various other forms of scannable images, as described in more detail below with respect to Fig. 5. Computing device 120 may be configured to generate scannable code 301 based on network location 310 and cryptographic key 311. For example, scannable code 301 may represent data containing both the network location 310 and the cryptographic key 311. Scannable code 301 may not be limited to the network location and key, and may contain other data, such as various identifiers (e.g., of the computing device, the scanning device, the data 320 to be uploaded, etc.), additional instructions to the scanning device 130 (e.g., instructions to report the data being uploaded, etc.), additional encryption information, nonce counters, metadata, or the like.

Scanning device 130 may then scan the scannable code 301, for example, using scanning component 234 described above. Thus, scanning device may receive encryption key 311 and network location 310. In some embodiments, scannable code 301 may only contain a portion of the network location or encryption key, such as the UUID associated with the network location, and the scanning device 130 may be configured to use the partial information provided in the scannable code 301 to determine the network location and encryption key. Scanning device 130 may further be configured to access the data 320 to be provided to computing device 120. In some embodiments, data 320 may be stored locally on scanning device 130, for example, in memory 232 or in a local database. Data 320 may also be accessed from a remote location, for example, on a cloud or network server. Scanning device 130 may be configured to encrypt data 320 using cryptographic key 311 to generate encrypted data 330. Accordingly, if public and private keys are used, scanning device 130 may use an asymmetric cryptography algorithm, such as RSA, Transport Layer Security (TLS), S/MIME, PGP, GPG or various other algorithms, to encrypt data 320. In some embodiments, key 311 may be a symmetric key, and a symmetric key algorithm, such as DES may be used to encrypt data 320. Scanning device 130 may then upload the encrypted data 330 to data storage platform 140 at a location identified by network location 310, for example, using HTTP POST or other methods.

Computing device 120 may be configured to access encrypted data 330 that has been uploaded to the special-purpose network location 310. In some embodiments, computing device 120 may receive a notification that encrypted data 330 has been uploaded, for example, from scanning device 130, the data storage platform 140 or other identities associated with system 100. In other embodiments, the computing device 120 may be configured to query whether the data is available from network location 310. For example, computing device 120 may send a query to scanning device 130, the data storage platform 140 or other identities associated with system 100. Computing device 120 may then decrypt the encrypted data 330 received from network location 310 using cryptographic key 312. Accordingly, computing device 120 may store or access an asymmetric or symmetric cryptography algorithm, as described above. As a result of the decryption, computing system 320 may obtain data 320.

In some embodiments, a reverse process to that shown in Fig. 3 may be used to transfer data from computing device 120 to scanning device 130 or an identity associated with the scanning device. Computing device may encrypt or sign data 320 using cryptographic key and upload the encrypted data 330 to data storage platform 140 at a location identified by network location 310. Computing device 120 may then send scannable code 301, containing the network location 140 and cryptographic key 311 to scanning device 130. By scanning the code, scanning device 130 may obtain the network location 310 and download the encrypted data 330 from the network location. Scanning device may then decrypt the encrypted data 330 using cryptographic key 311 provided via the scannable code 301 to obtain the data 320.

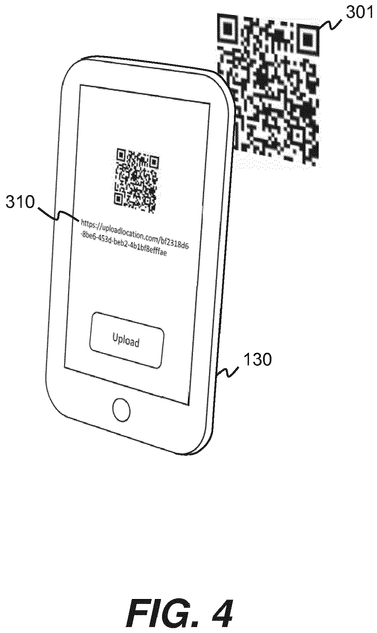

Figure 4 provides an exemplary illustration of scanning device 130 scanning a code in accordance with the disclosed embodiments. While scanning device 130 is shown as a mobile device in Fig. 4, scanning device 130 may include various other devices capable of scanning a code, as described above. As shown in Fig. 4, scannable code 301 may be made accessible to scanning device 130. For example, computing device 120 may present scannable code 301 on a display of the computing device or may print the scannable code. In some embodiments, scannable code 301 may be transmitted electronically through network 110 and made accessible to the scanning device 130 by an intermediate component or device in network 110, for example on a screen or printer in close proximity to scanning device 130, on a web page, within a graphical interface of an application, or otherwise accessible to the scanning device 130. In further embodiments, scannable code 301 may be displayed in an environment (e.g., screen, wall display, television, billboard, etc.) accessible to the scanning device 130. Scanning device 130 may scan the scannable code 301, for example, using a camera, barcode scanner, or other scanning hardware to obtain the network location 310 and cryptographic key 311. Scanning device 130 may also be configured to process and analyze the scanned image. For example, if scannable code 301 is a QR code, scanning device 130 may use Reed-Solomon error correction codes until the image can be interpreted to extract from patterns that are present in horizontal and vertical components of the image. Various parts of the scanning, decryption and upload process may occur transparently to a user of the scanning device. For example, the user may scan the QR code to identify the network location with the encryption occurring transparently to the user. The network location 310 may also be transparent to the user and the scanning device may appear to the user to transfer the data directly to computing device 120.

Figure 5 is an illustration of exemplary scannable codes in accordance with disclosed embodiments. In some embodiments scannable code 301, as discussed above, may be a QR code, and thus may conform to various standards or specifications, such as ISO/IEC 18004:2015. While scannable code 301 is shown as a QR code in Figs. 3 and 4, it is understood that various other formats or techniques may be used. In addition to QR code 501, other forms of 2D scannable codes may be used, such as a data matrix 502, Aztec 503, or PDF417 505. Various other formats not shown in Fig. 5 may be used (e.g., MicroPDF417, CodaBlock-F, MaxiCode, Microsoft Tag, Shotcode, etc.). In some embodiments, 1D bar codes 504, or other lower-capacity formats may also be utilized. For example, a bar code may provide the UUID number identifying the network location 310 and information associated with the cryptographic key. In some embodiments, scannable code 301 may be presented as an image 507. For example, scanning device 130 may use image processing techniques to ascertain data based on the content of the image, or the location of certain elements in the image. Computing device 120 may also be configured to embed the network location and the cryptographic key within or on top of image 507, for example using a digital watermark, etc. Scannable code 301 may also be a proprietary code or format, as represented by code 508, that may not be readable by other systems or devices. This may provide added security to system 100, as even if the scannable code is intercepted, the network location and public key may not be accessible.

In applications where computing device 120 is a terminal-based computer system (e.g., a Linux computer, mainframe, embedded system, etc.), scannable code 301 may be a text-based code 506. The terminal-based system may use ASCII encoding to generate a QR code or one of the other various scannable codes discussed above. For example, computing device 120 may generate a QR code using the "#" character, as shown in Fig. 5, or another suitable character or combination of characters. Due to the relatively lenient error correction capabilities of QR codes, the text-based code may be readable by scanning devices, similar to conventional image-based codes. Computing device 120 may also run a script or other code to optimize the scannable code, for example by selecting a combination of ASCII characters to maximize readability of the code. The use of such text-based codes may allow the terminal-based system to conveniently and securely request and obtain data despite limited ability for interaction.

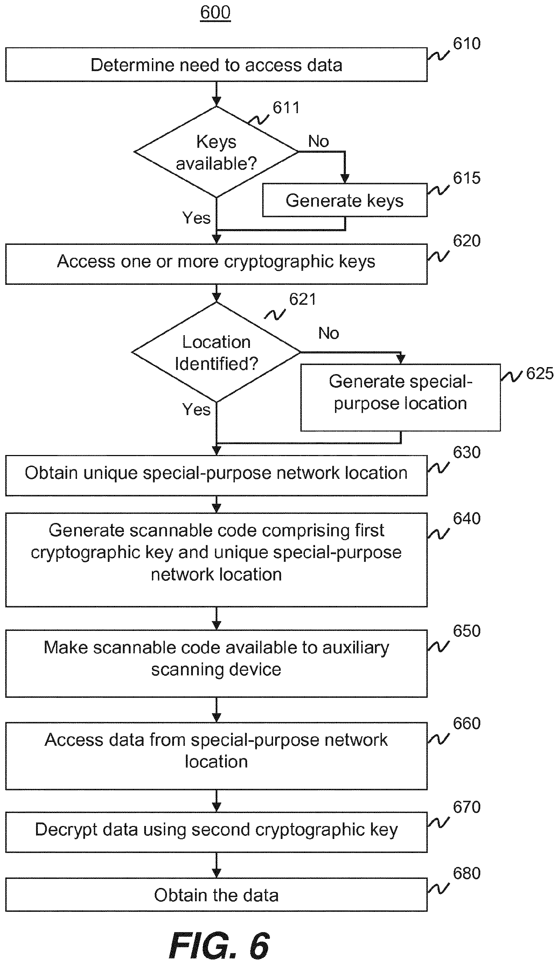

Figure 6 is a flowchart depicting an exemplary process 600 for a computing device to securely obtain data in cooperation with an auxiliary scanning device according to the disclosed embodiments. Process 600 may be implemented, for example, by processor 221, shown in Fig. 2A. Process 600 may correspond to process 300 shown in Fig. 3 and, accordingly, descriptions of the components and processes therein may apply to process 600 as well.

At step 610, process 600 may include determining whether data should be obtained in cooperation with a scanning device. As described above, this determination may be based on a request or command to access data, for example by a user of the computing device 120. The scanning device or an associated identity or device may also send a request to computing device 120 to upload or transmit data. The determination may be based on various other triggers as well, such as in response to a separate event or request, or based on a predetermined schedule.

At step 620, process 600 may include accessing one or more cryptographic keys (e.g., keys 311 and 312). As described above, the cryptographic keys may be a preexisting set of keys, or they may be generated on demand by computing device 120 or by another device in network 110, for example, based on the determination of step 610. Accordingly, process 600 may involve an additional substep 611 of determining whether the cryptographic keys are available. If not, computing device 120 may generate the keys in step 615 using a cryptographic key algorithm. If the keys are preexisting, computing device 120 may access the keys, for example, by retrieving them from a storage location. The cryptographic keys may be asymmetrical keys, such as a private key and a public key, or the cryptographic keys may each be the same symmetric key.

At step 630, process 600 may include obtaining a unique special-purpose network location for uploading the data. As described above, this network location may be a unique network address, for example, on a server, a cloud system or other data storage platform. The network location may be based on a UUID, for example by embedding the UUID in a Uniform Resource Locator (URL), and thus may be designed to be difficult to guess or predict. Alternatively, the network location may be based on a random data string. The network location may also have a limited period of validity and may be set to expire after a predetermined amount of time for added security. As described above, the unique network location may be preexisting or may be generated by computing device 120, for example, in response to the determination of step 610. Accordingly, process 600 may include additional substep 621 of determining whether the network location has been identified. If not, computing device 120 may generate the special purpose location in step 625.

At step 640, process 600 may include generating a scannable code. As described above with respect to process 300, the scannable code may include a first cryptographic key from the one or more cryptographic keys accessed in step 610. In some embodiments, the one or more cryptographic keys may comprise a public-private key pair. In such embodiments, the first cryptographic key may be a public key and a second cryptographic key may be a private key. The scannable code may further include the unique special-purpose network location obtained in step 630. The scannable code may be generated based on various formats, as described above with respect to Fig. 5. In embodiments where the computing device is a terminal-based system, the scannable code may be text-based, for example using QR code 506 generated using ASCII coding.

At step 650, process 600 may include making available, to the auxiliary scanning device, the scannable code. The computing device may, for example, display the scannable code on a screen or display associated with the device. Additionally, or alternatively, the computing device may print out the scannable code, either by itself or along with other text or information. In some embodiments, a user of the computing device may scan the scannable code using a scanning device as a way to conveniently and securely upload data to the computing device. This may be especially useful in applications where the computing device is a terminal-based computer system, but is also useful in non-terminal operation system environments.

At step 660, process 600 may include accessing data that has been uploaded to the unique special-purpose network location in a form encrypted by the first cryptographic key. For example, the data may have been encrypted by the scanning device using the first cryptographic key included in the scannable code. In some embodiments, the computing device may receive a notification that the data is available, for example, from the scanning device or from the special purpose network location. In other embodiments, the computing device may query whether the data is available from the unique special-purpose network location. For example, the computing device may periodically query whether the data is available at predetermined times. In some embodiments, the querying may be performed using a long polling technique. For example, the computing device may query whether data is available and rather than sending an empty or negative response, the network location may hold the request open until the data is available. In further embodiments, the querying may be performed anonymously, for example, by not providing an identifier of the computing device as part of the query. The query may also be performed in combination with a notification described above and the query may be performed in response to receiving the notification that the data has been uploaded.

At step 670, process 600 may include decrypting the accessed encrypted data using a second cryptographic key from the one or more cryptographic keys. If the cryptographic keys accessed in step 620 are asymmetric keys, the second cryptographic key may be a private key used to decrypt data that has been encrypted with the first cryptographic key. Alternatively, the keys may be symmetric keys, in which case the second cryptographic key is the same as the first cryptographic key. Computing device may therefore store or access one or more cryptographic key algorithms to decrypt the encrypted data. At step 680, process 600 may include obtaining the data based at least on the decryption in step 670. It is understood that additional steps, including additional processing, decryption, authentication, etc. may be required to obtain the data.

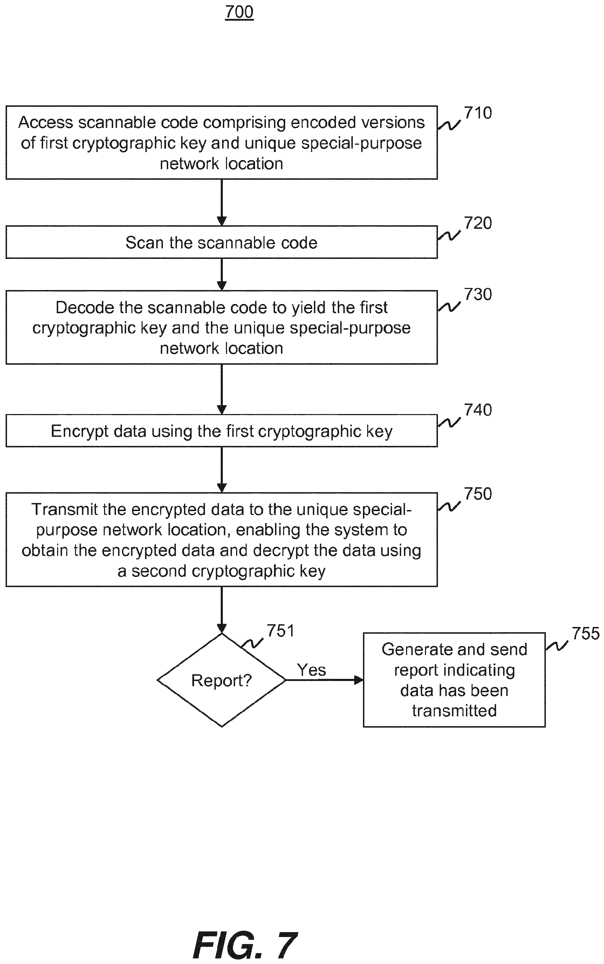

Figure 7 is a flowchart depicting an exemplary process 700 for a scanning device to securely provide data to a system in accordance with disclosed embodiments. Process 700 may be executed by scanning device 130 (e.g., by processor 231) to provide data to computing device 120.

At step 710, process 700 may include accessing a scannable code made available from a system, the scannable code comprising encoded versions of a first cryptographic key and a unique special-purpose network location. For example, scannable code 301 may be made available by computing device 120 and may contain data representative of network location 310 and encryption key 311, as described above. The first encryption key may be a public key of a set of asymmetric keys or may be a first symmetric key. The network location may direct the scanning device 130 to a specific storage location, such as on data storage platform 140, accessible by the scanning device over a network. The network location may be based on a UUID, for example by embedding the UUID in a URL, and thus may be designed to be difficult to guess or predict. The network location may also have a limited period of validity and may be set to expire after a predetermined amount of time for added security.

At step 720, process 700 may include scanning the scannable code using a scanning interface. If process 700 is performed using scanning device 130, the code may be scanned by scanning component 234. Fig. 5 shows an exemplary scanning device 130 capable of scanning the scannable code. At step 730, process 700 may include decoding the scannable code to yield the first cryptographic key and the unique special-purpose network location. Step 730 may include processing and interpreting the image, for example, according to ISO/IEC 18004:2015 and using Reed-Solomon error correction or other image processing techniques.

At step 740, process 700 may include encrypting data using the first cryptographic key. The scanning device may use the cryptographic key obtained from the scannable code and use it to encrypt the data to be provided to the computing device. Accordingly, the scanning device may store or access an encryption algorithm, such as RSA or additional algorithms described above.

At step 750, process 700 may include transmitting the encrypted data to the unique special-purpose network location. This may enable the system to obtain the encrypted data from the unique special-purpose network location and decrypt the encrypted data using a second cryptographic key maintained by the system. For example, if the first and second cryptographic keys are an asymmetric pair, the system may use a private key to decrypt data that was encrypted using a public key provided to the scanning device via the scannable code. In other embodiments, the cryptographic keys may be a symmetric pair, such that the key used to decrypt the data and the key provided to the scanning device to encrypt the data are the same.

Process 700 may also include further steps, such as sending a report indicating that the encrypted data has been transmitted to the unique special-purpose network location. Accordingly, in step 751, the scanning device may determine whether reporting is required, for example, based on predefined rules or settings of the device, or based on information contained in the scannable code. In step 755, process 700 may include generating and sending a report indicating the data has been transmitted. Based on the received report, the computing system may access and decrypt the data, or in some cases, may query the network location to determine whether the data is available.

Various potential use cases of the disclosed embodiments are described below. It is understood that these cases are provided by way of example only and are not limiting of the present disclosure. One potential use case may be to facilitate the transfer of medical data. For example, a computing device may determine it requires access to a medical record or other medical data associated with a patient. The computing device may be associated with a hospital, a physician's office, a diagnostic laboratory, an insurance company, or any other entity requiring access to a patient's medical record. In some embodiments, the computing system may determine a need to access the medical record based on a request or query received from the computing device. For example, a medical provider (e.g., doctor, nurse, technician, specialist, etc.) may submit a request to access a medical record from a patient or from another healthcare provider (e.g., from a lab or associated medical facility). In another example, a patient, caregiver, family member, or the like may submit a request to transfer a medical record. In some embodiments, the computing system may determine a need to access the data automatically, for example, based on an upcoming appointment or procedure, a transfer of care of the patient, or various other scenarios.

Based on the determined need for the medical record or medical data, the computing device may generate one or more cryptographic keys and a unique special-purpose network location for uploading the data. In this case, the network location may be associated with a healthcare provider, such as on a hospital server, a web-based medical platform, or the like. The network location may also be any of the exemplary network locations described in detail above. The computing device may then generate a scannable code comprising the network location and one of the encryption keys and make the scannable code available to a scanning device. For example, the computing device may print the scannable code or display the scannable code on a screen. A user of the scanning device may then scan the code to initiate transfer of the medical record or medical data. In this case, the user may be a patient providing his or her medical data to the computing system, for example, by scanning the code using a mobile phone, or other device capable of scanning or capturing an image. The user may also be a healthcare provider (e.g., a doctor, nurse, lab technician, specialist, etc.) and may scan the code using a scanning device to transfer a patient's medical data.

The scanning device may then obtain the cryptographic key and the network location provided via the scannable code. The scanning device may access the medical record or data, either locally in the device or by retrieving the data from a remote location, and may encrypt the data using the cryptographic key. The scanning device may then upload the encrypted medical record or medical data to the network location. In some embodiments, the scanning device may further send a notification to the computing system indicating the data is accessible. The computing system may then obtain the encrypted medical record or medical data from the network location and decrypt the data using a second cryptographic key. Thus, using the scannable code, the computing system may securely request and obtain a medical record using the disclosed embodiments.

Another possible use case may be for the transfer of financial information. Similar to the previous example, a computing system may determine a need to access certain financial information in a convenient and secure manner. In some embodiments, this information may include financial data associated with an individual, such as a transaction history, bank or credit card account information, credit score data, etc. For example, a computing system may be associated with a financial institution requesting data from an individual to open a new account, process a loan application, determine eligibility for a product or service, or any other scenarios which may require access to financial information. Alternatively, the financial institution may request information from a second financial institution, such as another bank, credit card company, trust company, etc. In other embodiments, the financial information may be associated with a particular transaction. For example, the computing system may be associated with a merchant requesting credit card or bank account information from a customer for processing a transaction or purchase. Various other scenarios may exist in which a computing system requires access to financial information.

The computing system may generate a set of cryptographic keys and a unique special-purpose network location for uploading the data. In this example, the network location may be associated with a particular financial institution, such as on a bank server, on a banking website, or the like. The computing system may then generate a scannable code comprising the network location and one of the cryptographic keys and may make the code available to a scanning device. In some embodiments, the computing system may print the scannable code, such as on a bank statement, a loan or credit application document, a letter to an accountholder, a bill, etc. The scannable code may also be displayed on a screen, for example, on a display of the computing system, on a website, on a television screen, etc. In embodiments where the computing device is associated with a merchant, the scannable code may be presented to a customer, such as on a display at a cashier terminal or printed on a bill or invoice. As an example, a restaurant may print a scannable code on a check or display the code on a device at the customer's table, which may enable the customer to provide payment information by scanning the code.

A user of the scanning device may then scan the code to initiate transfer of the financial information. For example, a user may be a bank customer (or potential customer) and may scan the code using a mobile device to provide payment or other financial information to the bank. The scanning device may then extract the cryptographic key and the network location from the code. The scanning device may access the requested data and encrypt the data using the scannable code. The scanning device may then upload the encrypted data to the network location. In some embodiments, the scanning device may also send a notification to the computing device indicating the data has been uploaded. The computing device may then obtain the requested data by accessing the encrypted data from the network location and decrypting the data using one of the cryptographic keys.

In yet another potential use case, a computing device may securely obtain software using a scannable code. For example, the computing device may generate a scannable code in order to install a new software program, to update to a newer version of previously installed software, or to install a patch (e.g., a security patch, etc.). As described above, in some embodiments, the computing device may be a terminal-based system with limited means of interfacing with a user. The terminal may use a scannable code to securely obtain access to the software install files or other data required to update software on the terminal. Other non-terminal-based systems may equally use the disclosed embodiments, however.

The computing system may determine a need for the software, for example, based on a request from a user, a notification from a software provider, a policy or rule associated with the computing device, a predetermined schedule, an identified security threat, or by various other means. Based on the determination, the computing device may request an installation file, or other data associated with the software, using a scannable code. The computing device may generate a set of cryptographic keys and a unique special-purpose network location where the software files or data can be uploaded and may generate a scannable code to include the network location and one of the cryptographic keys. A scanning device may then be used to scan the scannable code made available by the computing device. For example, an IT professional, administrator, or other user may scan the code using a mobile scanning device to initiate transfer of the software data. In some embodiments, the user of the scanning device may be the same as the user of the computing system and the scannable code may allow the user to easily and securely install software on the computing system using the scanning device.

The scanning device may then extract the cryptographic key and network location from the code. The scanning device may encrypt the requested installation file or software data using the received cryptographic key and then upload the encrypted data to the unique special-purpose network location. As in the previous examples, the scanning device may also notify the computing device that the data has been uploaded. The computing device may then obtain the software installation file by accessing the encrypted data from the network location and decrypting the data using one of the cryptographic keys. Thus, using the disclosed methods and systems, the computing device may securely obtain and install the requested software or software update.

It is to be understood that the disclosed embodiments are not necessarily limited in their application to the details of construction and the arrangement of the components and/or methods set forth in the following description and/or illustrated in the drawings and/or the examples. The disclosed embodiments are capable of variations, or of being practiced or carried out in various ways.

The disclosed embodiments may be implemented in a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowcharts or block diagrams may represent a software program, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant virtualization platforms, virtualization platform environments, trusted cloud platform resources, cloud-based assets, protocols, communication networks, security tokens and authentication credentials will be developed and the scope of these terms is intended to include all such new technologies a priori.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

Also disclosed herein are the following clauses:
1. A computer readable medium including instructions that, when executed by at least one processor, cause the at least one processor to perform operations for securely obtaining data in cooperation with an auxiliary scanning device, the operations comprising:
   accessing one or more cryptographic keys;
   obtaining a unique special-purpose network location;
   generating a scannable code comprising encoded versions of:
      a first cryptographic key from the one or more cryptographic keys, and
      the unique special-purpose network location;
      making available, to the auxiliary scanning device, the scannable code;
      accessing data that has been uploaded to the unique special-purpose network location in a form encrypted by the first cryptographic key;
      decrypting the accessed encrypted data using a second cryptographic key from the one or more cryptographic keys; and
      obtaining, based on at least the decrypting, the data.
2. The computer readable medium of clause 1, wherein the operations further comprise determining, before the accessing, that the data should be obtained.
3. The computer readable medium of clause 2, wherein accessing the one or more cryptographic keys includes generating the one or more cryptographic keys based on the determining.
4. The computer readable medium of clause 2, wherein obtaining the unique special-purpose network location includes generating a unique special-purpose network address based on the determining.
5. The computer readable medium of clause 1, wherein:
   the one or more cryptographic keys comprise a public-private key pair;
   the first cryptographic key is a public key; and
   the second cryptographic key is a private key.
6. The computer readable medium of clause 1, wherein the first cryptographic key and the second cryptographic key are each the same symmetric key.
7. The computer readable medium of clause 1, wherein the unique special-purpose network location is based on a universally unique identifier.
8. The computer readable medium of clause 1, wherein the unique special-purpose network location has a limited period of validity.
9. The computer readable medium of clause 1, wherein the operations further comprise receiving a notification that the data is available from the unique special-purpose network location.
10. The computer readable medium of clause 1, wherein the operations further comprise querying whether the data is available from the unique special-purpose network location.
11. An auxiliary scanning device, comprising:
   a scanning interface;
   a memory storing software instructions for securely providing data to a system; and
   a hardware-based processor configured to execute the software instructions to perform operations comprising:
      accessing a scannable code made available from the system, the scannable code comprising encoded versions of a first cryptographic key and a unique special-purpose network location;
      scanning the scannable code using the scanning interface;
      decoding the scannable code to yield the first cryptographic key and the unique special-purpose network location;
      encrypting data using the first cryptographic key; and
      transmitting to the unique special-purpose network location the encrypted data, to enable the system to obtain the encrypted data from the unique special-purpose network location and decrypt the encrypted data using a second cryptographic key maintained by the system.
12. The auxiliary scanning device of clause 11, wherein the unique special-purpose network location is a URL that includes a universally unique identifier.
13. The auxiliary scanning device of clause 11, wherein the unique special-purpose network location has a limited period of validity.
14. The auxiliary scanning device of clause 11, wherein the operations further comprise sending a report indicating that the encrypted data has been transmitted to the unique special-purpose network location.
15. A computer-implemented method for securely obtaining data at a system in cooperation with an auxiliary scanning device, the method comprising:
   accessing one or more cryptographic keys;
   obtaining a unique special-purpose network location;
   generating a scannable code comprising encoded versions of:
      a first cryptographic key from the one or more cryptographic keys, and
      the unique special-purpose network location;
      making available, to the auxiliary scanning device, the scannable code;
      accessing data that has been uploaded to the unique special-purpose network location in a form encrypted by the first cryptographic key;
      decrypting the accessed encrypted data using a second cryptographic key from the one or more cryptographic keys; and
      obtaining, based on at least the decrypting, the data.
16. The computer-implemented method of clause 15, further comprising querying whether the data is available from the unique special-purpose network location.
17. The computer-implemented method of clause 16, wherein the querying is performed periodically.
18. The computer-implemented method of clause 16, wherein the querying is performed anonymously by not providing an identifier of the system as part of the querying.
19. The computer-implemented method of clause 16, wherein the querying is performed using a long polling technique.
20. The computer-implemented method of clause 16, wherein the querying is performed in response to receiving a notification that the data has been uploaded to the unique special-purpose network location.

## Claims

1. A computer-implemented method for securely obtaining data in cooperation with an auxiliary scanning device, the method comprising:
accessing one or more cryptographic keys;
obtaining a unique special-purpose network location;
generating a scannable code comprising encoded versions of: a first cryptographic key from the one or more cryptographic keys, and the unique special-purpose network location;
making available, to the auxiliary scanning device, the scannable code;
accessing data that has been uploaded to the unique special-purpose network location in a form encrypted by the first cryptographic key;
decrypting the accessed encrypted data using a second cryptographic key from the one or more cryptographic keys; and
obtaining, based on at least the decrypting, the data.

2. The computer-implemented method of claim 1, further comprising determining, before the accessing, that the data should be obtained.

3. The computer-implemented method of claim 2, wherein accessing the one or more cryptographic keys includes generating the one or more cryptographic keys based on the determining.

4. The computer-implemented method of claim 2 or claim 3, wherein obtaining the unique special-purpose network location includes generating a unique special-purpose network address based on the determining.

5. The computer-implemented method of any of claims 1 to 4,
wherein:
the one or more cryptographic keys comprise a public-private key pair,
the first cryptographic key is a public key, and
the second cryptographic key is a private key; or
wherein the first cryptographic key and the second cryptographic key are each the same symmetric key.

6. The computer-implemented method of any of claims 1 to 5, further comprising receiving a notification that the data is available from the unique special-purpose network location.

7. The computer-implemented method of any of claims 1 to 6, further comprising querying whether the data is available from the unique special-purpose network location.

8. The computer-implemented method of claim 7, wherein the querying is performed periodically.

9. The computer-implemented method of claim 7 or claim 8, wherein the querying is performed anonymously by not providing an identifier of the system as part of the querying, or wherein the querying is performed using a long polling technique.

10. A computer-implemented method for securely providing data to a system by an auxiliary scanning device, the method comprising:
accessing a scannable code made available from the system, the scannable code comprising encoded versions of a first cryptographic key and a unique special-purpose network location;
scanning the scannable code using the scanning interface;
decoding the scannable code to yield the first cryptographic key and the unique special-purpose network location;
encrypting data using the first cryptographic key; and
transmitting to the unique special-purpose network location the encrypted data, to enable the system to obtain the encrypted data from the unique special-purpose network location and decrypt the encrypted data using a second cryptographic key maintained by the system.

11. The computer-implemented method of claim 10, further comprising sending a report indicating that the encrypted data has been transmitted to the unique special-purpose network location.

12. The computer-implemented method of any of claims 1 to 11, wherein the unique special-purpose network location is based on a universally unique identifier or is a URL that includes a universally unique identifier.

13. The computer-implemented method of any of claims 1 to 12, wherein the unique special-purpose network location has a limited period of validity.

14. A computer-readable medium including instructions that, when executed by at least one processor cause the at least one processor to perform the method of any of claims 1 to 13.

15. An auxiliary scanning device, comprising:
a scanning interface;
a memory storing software instructions for securely providing data to a system; and
a hardware-based processor configured to execute the software instructions to perform the method of any of claims 10 to 13.
